# EUROPÄISCHE PATENTSCHRIFT

(11) **EP 3 359 330 B1**
(45) Veröffentlichungstag und Bekanntmachung des Hinweises auf die Patenterteilung: **04.08.2021**
(21) Anmeldenummer: 16778032.9
(22) Anmeldetag: 07.10.2016
(51) Int. Cl.: B23P 19/04, B25J 9/16, B25J 11/00

(54) **ANORDNUNG ZUM ZERTEILEN VON GROSSFORMATIGEN, FASERVERBUNDMATERIALANTEILE ENTHALTENDEN SPERRGUT**
ARRANGEMENT FOR DISTRIBUTING BULKY GOODS CONTAINING LARGE-FORMAT COMPOSITE FIBRE MATERIAL COMPONENTS
SYSTÈME POUR SÉPARER DES OBJETS ENCOMBRANTS DE GRANDE TAILLE CONTENANT DES PARTIES EN MATÉRIAU COMPOSITE RENFORCÉ PAR DES FIBRES

(30) Priorität: 07.10.2015 DE 102015219412
(43) Veröffentlichungstag der Anmeldung: 15.08.2018
(73) Patentinhaber: Hanseatic Rohr GmbH, 18211 Bargeshagen (DE)
(72) Erfinder: DREWES-LOJEWSKI, Thomas, 18147 Rostock (DE)
(74) Vertreter: Rösler, Uwe
(86) Internationale Anmeldenummer: PCT/EP2016/073991
(87) Internationale Veröffentlichungsnummer: WO 2017/060421

(56) Entgegenhaltungen:
- WO-A2-2008/110899
- CN-U- 204 019 375
- DE-A1-102014 200 181
- GB-A- 2 447 455
- US-A- 5 390 128

## Beschreibung

### Technisches Gebiet

Die Erfindung bezieht sich auf eine Anordnung zum Zerteilen von großformatigen, Faserverbundmaterialanteile enthaltenden Sperrgut, insbesondere in Form von Rotorblätter für Windkraftanlagen, mit einer Zerteileinheit, der über eine Zuführeinrichtung das großformatige Sperrgut zuführbar ist.

### Stand der Technik

Rund die Hälfte der in Deutschland installierten Windenergieanlagen ist älter als 10 Jahre, so dass innerhalb der nächsten Jahre eine große Vielzahl von in Betrieb befindlichen Windenergieanlagen ihre rund 20-jährige Lebensdauer erreichen werden. Aus diesem Grunde gilt es Altanlagen im Rahmen eines Repowering vorzeitig durch neue, effizientere Windenergieanlagen zu ersetzen. Im Zuge der Modernisierung und Erneuerung von Windenergieanlagen gilt es u.a. Rotorblätter oder Großkabinengehäuse, die vorrangig aus Faserverbundmaterialien bestehen, fachgerecht zu entsorgen.

Für eine fachgerechte Entsorgung derartig großbauender Sperrgüter, allen voran seien Rotorblätter genannt, die z.T. Flügelspannweiten von 70 m und mehr besitzen, bedarf es einer vor Ort Zerteilung, um transportfähige Teilstücke zu erhalten, die mittels üblicher Straßenverkehr zugelassener Sattelschleppzüge zu Recycling-Deponien verbracht werden können, in denen mittels Großmaschinen die in Teilstücke zerlegten Rotorblätter geschreddert und in unterschiedliche Stofffragmente zu Zwecken ihrer Wiederverwendung separiert werden. Grundsätzlich gestaltet sich jedoch die "Vor-Ort-Zerlegung" der Rotorblätter aufgrund des großen Formen- und Größenspektrums als schwierig.

Die Druckschrift DE 20 2015 003 559 A1 beschreibt eine mobile Sägeeinheit, mit der es möglich ist Rotorblätter mittels Linearschnitte zu traversieren. Hierzu weist die bekannte Sägeeinrichtung einen über diverse Umlenkrollen endlos umlaufenden Seilsägezug auf, der mittels einer Linearkinematik quer zur Längserstreckung eines Rotorblattes relativ beweglich verfahrbar gelagert ist.

Einen anderen Ansatz zur Zerkleinerung großformatiger Rotorblätter verfolgt das Verfahren zur Rückgewinnung von Fasern aus Formteilen aus Kunststoffverbundmaterialien, das in der Europäischen Druckschrift EP 2 764 970 A1 beschrieben ist. Die Zerlegung eines großformatigen Formteils erfolgt mittels linienförmiger Sprengladungen, insbesondere mittels Sprengschnüren, die auf das zu zerlegende Formteil aufgebracht werden.

Der Druckschrift DE 10 2010 046 685 A1 sind eine Vorrichtung sowie ein Verfahren zum Aufbereiten von Altrotorblättern von Windkraftanlagen zu entnehmen, die im Rahmen einer stationären Aufbereitungsanlage zur Anwengun kommen. Gleichwohl die mittels elektrisch oder hydraulisch betriebenen Säbelsägen oder Zangen zum Zwecke einer Grobzerkleinerung der großvolumigen Rotorblätter am Ort der Windkraftanlage zum Einsatz kommen können, erfolgen sämtliche weitere Auftrennschritte zum Erhalt einzelner, möglichst sortenreiner Materialfraktionen in einer Aufberitungsanlage.

Aus der Druckschrift DE 02 763 538 T9 sind ein Verfahren und ein System zur automatischen, softwaregestützten Steuerung von Orientierungsparametern eines Wasserstrahl zu entnehmen, die dem Zweck einer optimierten Trennqualität beim Einsatz von Wasserstrahlschneiden an Objketen beliebiger Art dienen, um die Schnittkantengüte zu verbessern.

Dokument GB2447455A offenbart ein Trägersystem für eine Roboterkinematik, die zur Bearbeitung von Objekten befähigt ist, wobei das Trägersystem ein Basiselement, dessen Position mit Hilfe geeignet ausgebildeter Transferelemente veränderbar ist, umfasst.

Dokument WO2008110899A2 offenbart eine Trägersystem für eine Roboterkinematik, die ausdrücklich und ausschließlich zur Oberflächenendbearbeitunq einer Struktur, wie vorzugsweise Rumpfoberflächen von Booten, ausgelegt ist.

Dokument DE102014200181 offenbart eine mobile Containereinheit mit einen Roboter zum Warten und/oder Reparieren von Batteriesystemen bzw. Batteriemodule, wobei die Containereinheit luftdicht umschlossenen ist.

Den bekannten Zerlegungs- bzw. Zerteiltechniken haftet jedoch eine Reihe von Nachteilen an: Zum einen unterliegen sämtliche mit den jeweils zu zerteilenden, großformatigen Sperrgut in mechanische Wirkverbindung tretende Sägewerkzeuge einem signifikanten Verschleiß, der mit kostenintensiven Wartungs- oder Ersatzteilmaßnahmen verbunden ist. Das Zerteilen eines großformatigen Sperrgutes mittels Sprengladungen erfordert neben Schutzmaßnahmen, die ein unkontrolliertes Wegschleudern von explosionsbedingten Sperrgutfragmenten verhindern müssen, eine Material- und zeitaufwendige Präparation des zu zerteilenden Sperrgutes mittels linienförmiger Sprengladungen, die zeit- und risikobehaftet ist.

### Darstellung der Erfindung

Der Erfindung liegt die Aufgabe zugrunde eine Anordnung zum Zerteilen von großformatigen, Faserverbundmaterialanteile enthaltenden Sperrgut, insbesondere in Form von Rotorblätter für Windkraftanlagen, mit einer Zerteileinheit, der über eine Zuführeinrichtung das großformatige Sperrgut zuführbar ist, derart auszubilden, so dass zum einen kostenintensive und verschleißbedingte Reparatur- und Ersatzteilerfordernisse weitgehend ausgeschlossen werden können. Überdies gilt es die Möglichkeit zu schaffen, das großformatige Sperrgut in beliebig kleine, handhabbare Sperrgutfragmente aufzuteilen, die einen Abtransport mit kostengünstigen und nicht notwendigerweise als Schwertransport zu kennzeichnenden Lastkraftwagen gestatten. Die neuartige Anordnung soll einen temporären Einsatz vor Ort ohne großen Montage- und Demontageaufwand ermöglichen. Vorzugsweise sollte die Anordnung als mobile Einheit vor Ort stationierbar sein. Schließlich gilt es jeglichen Umweltschutzbedigungen Rechnung zu tragen, so dass keinerlei, durch den Zerteilungsprozeß bedingter Stoffeintrag in die Umgebung der Anordnung verursacht wird.

Die Lösung der der Erfindung zugrundeliegenden Aufgabe ist im Anspruch 1 angegeben. Den Erfindungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen.

Lösungsgemäß zeichnet sich die Anordnung zum Zerteilen von großformatigen, Faserverbundmaterialanteile enthaltenden Sperrgut mit einer Zerteileinheit, der über eine Zuführeinrichtung das großformatige Sperrgut zuführbar ist, dadurch aus, dass die Zerteileinheit einen Handhabungsroboter sowie eine Sensoreinrichtung umfasst, Der Handhabungsroboter ist zudem mit einer Einrichtung zur Durchführung eines Strahlschneidprozesses mit einer ein Schneidmedium austragenden Strahlschneiddüsenanordnung kombiniert, die innerhalb eines durch die Roboterkinematik des Handhabungsroboters zugänglichen Arbeitsraumes positionierbar ist. Die Sensoreinrichtung ist derart ausgebildet und angebracht, dass die Sensoreinrichtung den Arbeitsraum des Handhabungsroboters erfasst und ortsaufgelöste Sensorsignale erzeugt. Eine zusätzlich vorgesehene Steuereinheit steht mit der Sensoreinrichtung in Datenverbindung und steuert auf der Grundlage der ortsaufgelösten Sensorsignale den Handhabungsroboter an. Zudem sind die Zerteileinheit und die Steuereinheit bezüglich Größe, Gewicht und Anordnung derart ausgebildet, dass die Zerteileinheit und Steuereinheit auf einer straßenzugelassenen, mobilen Plattform transportierbar sind, so dass die Zerteilarbeiten vor Ort durchgeführt werden können.

Mit der lösungsgemäßen Anordnung ist die Zerlegung großformatiger Sperrgüter möglich, bspw. in Form von Rotorblättern oder Gondeln für Windkraftanlagen, Schiffs- oder Flugzeugrümpfe oder Tanks, um nur einige Beispiele in nicht abschließender Form zu nennen.

Die Einrichtung zur Durchführung des Strahlschneidprozesses ist zur Erzeugung eines Stoffstroms ausgebildet, der aus einem Schneidmedium besteht oder zumindest ein Schneidmedium aufweist. Der Stoffstrom verfügt über einen möglichst kleinen Strömungsquerschnitt sowie über eine möglichst hohe Strömungsgeschwindigkeit, so dass der auf das grossformatige Sperrgut auftreffende Stoffstrom das Sperrgut im Wege eines abrasiven, lokalen Materialabtrages zu zerteilen in der Lage ist. In einer besonders bevorzugten Ausführungsform der Einrichtung zur Erzeugung eines Strahlschneidprozesses dient als Schneidmedium eine Flüssigkeit vorzugsweise Wasser, das mit einem sehr hohen Förderdruck, typischerweise von bis zu 6000 bar einer Schneiddüsenanordnung zugeführt wird, aus der der Wasserstrahl mit einer Austrittsgeschwindigkeit von bis zu 1000m/Sek. und einem Strahldurchmesser von 1mm und kleiner austritt. Vorzugsweise können dem aus der Wasserstrahlschneiddüsenanordnungen austretenden Wasserstrahl zusätzliche Abbrasivwerkstoffe zugesetzt sein, die die Schneidwirkung erhöhen.

Alternative Schneidmedien stellen abbrasiv wirkende, aus Feststoffen bestehende Strahlmittel, wie beispielsweise Schlacke, Korund, Granatsand, Kunststoffe, Glasperlen, Trockeneis oder Hartgusspulver dar, die einem Hochdruckluftstrahl beigemengt werden, der zum Trennen bzw. Schneiden auf das großformatige Sperrgut gerichtet wird.

Je nach Wahl des Schneidmediums, gilt es eine geeignet ausgebildete an sich bekannte Strahlschneiddüsenanordnung einzusetzen und diese zu Zwecken ihrer räumlich freien Positionierung am Endmanipulatorarm des Handhabungsroboters anzubringen. Der Einsatz eines Strahlschneidprozesses zum Trennen des großformatigen Sperrgutes vermeidet einen Verschleiß am Trennwerkzeug, d.h. an der Strahlschneiddüsenanordnung, und ermöglicht. bspw. im Gegensatz zur Sägewerkzeugen eine freie räumliche Positionierung der leicht und klein bauend auszubildenden Strahlschneiddüsenanordnung mittels des Handhabungsroboters, so dass der Trennvorgang an nahezu beliebigen großformatigen Sperrgutgeometrien, die von außen zugänglich sind, vorgenommen werden kann.

Zu Zwecken einer räumlich definierten Auslenkung der Strahlschneiddüsenanordnung in Abstimmung mit den Form- und Größenverhältnissen des zu zerteilenden Sperrgutes bedarf es einer räumlich, ortsauflösenden Erfassung des innerhalb des Arbeitsraumes verbrachten Sperrgutes. Hierzu dient die den Arbeitsraum des Handhabungsroboters erfassende Sensoreinrichtung. Vorzugsweise weist die Sensoreinrichtung mehrere ortsauflösende Sensoren verteilt im Arbeitsraum auf, wie beispielsweise ortsauflösende CCD-Kameras, Ultraschallsensoren, radarbasierte Sensoren oder Laserscanner, etc.

Auf der Basis der seitens der Sensoreinrichtung erfassten ortsaufgelösten Sensorsignale, die drahtlos oder drahtgebunden der Steuereinheit zugeführt werden, erfolgt eine Auswertung und eine Trajektorienermittlung, längs der die Strahlschneiddüsenanordnung vermittels des Handhabungsroboters auszulenken ist, um Sperrgutfragmente einer bestimmten Größe und Form für den Abtransport zu erhalten. Zur vereinfachten Handhabung sowie auch aus Gründen eines unkomplizierten Abtransportes und einer nachfolgenden, in einem Recyclingwerk durchzuführenden Materialtrennung und Materialwiedergewinnung für eine weiterführende Verwendung, bieten sich Sperrgutfragmentgrößen von einem Quadratmeter oder wenigen Quadratmetern an. Hierzu gilt es, die Strahlschneiddüsenanordnung in geeigneter Weise über die Oberfläche des großformatigen Sperrgutes zu führen.

In einer bevorzugten Ausführungsform ist zur Vermeidung von Kollisionen zwischen dem Handhabungsroboter und der am Endmanipulatorarm angebrachten Strahlschneiddüsenanordnung mit dem großformatigen Sperrgut wenigstens ein berührungsloser und/oder taktiler Abstandssensor am Handhabungsroboter oder an der Strahlschneiddüsenanordnung angebracht, der zusätzlich zu den ortsauflösenden Sensorsignalen seitens der Sensoreinrichtung, die den gesamten Trennprozess erfasst und überwacht, Abstandsinformationen zwischen der Strahlschneiddüsenanordnung und der Oberfläche des aufzutrennenden, großformatigen Sperrgut generiert. Diese Abstandsinformationen, die der Steuereinheit zusätzlich zugeführt werden, bilden eine ergänzende Grundlage für die räumliche Auslenkung des Handhabungsroboters sowie für die Ansteuerung der Einrichtung zur Durchführung des Strahlschneidprozesses.

Die Einrichtung zur Durchführung des Strahlschneidprozesses umfasst neben der am Manipulatorendarm des Handhabungsroboters angebrachten Strahlschneiddüsenanordnung eine mit dieser fluiddicht verbundene Hochdruckrohrleitung zur Zuführung des druckbeaufschlagten Schneidmediums zur Strahlschneiddüsenanordnung. Die Hochdruckrohrleitung ist über eine Hochdruckpumpe mit einem das Schneidmedium bevorratenden Reservoir verbunden oder über eine entsprechend ausgebildete Fluidschnittstelle mit diesem verbindbar. Die Einrichtung zur Durchführung des Strahlschneidprozesses ist vorzugsweise derart dimensioniert und ausgebildet, so dass die räumliche Auslenkbarkeit sowie auch die Auslenkdynamik des Handhabungsroboters nicht beeinträchtigt ist.

Um zu vermeiden, dass die Umgebung um die lösungsgemäße Anordnung zum Zerteilen von großformatigen Sperrgut von durch den Trennprozess entstehenden Materialpartikeln und -feinstäuben belastet wird, ist zumindest der Arbeitsraum, der den Handhabungsroboter sowie die Sensorik umfasst, mit einer zelt- oder kabinenartig ausgebildeten Umhausung umgeben, die aufwandsarm montier- sowie demontierbar ist. Die Umhausung sieht für eine seitliche Zuführung des großformatigen Sperrgutes einen Zuführbereich vor, der möglichst bündig an die Raumform des in den Arbeitsraum hineinreichenden Sperrgutes flexibel angepasst ist.

In einer bevorzugten Ausführungsform ist das von der Umhausung umfasste Volumen mit einer Unterdruckquelle verbunden, so dass sichergestellt ist, dass aufgrund des innerhalb des Arbeitsraumes vorherrschenden Unterdruckes kein oder kein signifikanter Materialeintrag in die Umgebung stattfindet.

Die Zuführung des großformatigen Sperrgutes in den Arbeitsraum erfolgt diskontinuierlich, vorzugsweise mit Hilfe einer im oder in Förderrichtung vor dem Arbeitsraum im Bereich des Zuführbereiches angebrachten Seilzugeinrichtung. Im Falle eines zu zerteilenden Rotorblattes einer Windkraftanlage, wird das Rotorblatt beginnend mit dem der Rotorblattnabe zugewandten Rotorende auf ein innerhalb oder in Förderrichtung vor dem Arbeitsraum angebrachtes Auflager aufgelegt und vorzugsweise fixiert, so dass das Rotorblattende in den Arbeitsraum zu Zwecken der Separierung in Quadratmeter groß messende Rotorblattfragmente teilweise hineinragt.

Mit Hilfe einer im Bereich des Arbeitsraum zusätzlich vorgesehenen Manipulatoreinheit, beispielsweise in Form eines Transportbandes, auf das die separierten Sperrgutfragmente selbständig fallen, und/oder in Form eines zusätzlichen Robotergreifarmes gelangen die separierten Sperrgutfragmente aus dem Arbeitsraum und können in geeigneter Weise zur Verladung auf LKWs zum Abtransport verbracht werden.

Um einen möglichst flexiblen und schnellen Einsatz der Anordnung vor Ort realisieren zu können, ist die Anbringung der Anordnung auf einer Straßen zugelassenen, mobilen Plattform, beispielsweise in Form eines LKW-Anhängers vorgeshen. Form, Gewicht und Anordnung zumindest der Zerteileinheit, umfassend den Handhabungsroboter, die Sensoreinrichtung und die Einrichtung zur Durchführung des Strahlschneidprozesses, sowie der Steuereinheit sind in geeigneter Weise unter Maßgabe an die Ausgestaltung von Straßen zugelassenen Lastkraftwagen zu wählen.

Eine bevorzugte Ausführungsform sieht zusätzlich zur Zerteileinheit und der Steuereinheit eine Aufbereitungsanlage für das mit Materialpartikeln versetzte Schneidmedium auf der mobilen Plattform vor. Im Rahmen des Schneidprozesses werden Materialstäube und -partikel von dem Sperrgut losgelöst und vermischen sich mit den Schneidmedium. Zur Vermeidung einer vor Ort-Entsorgung wird das mit den Trennprodukten versetzte Schneidmedium mittels einer Aufbereitungsanlage gesäubert und der Einrichtung zur Durchführung des Strahlschneidprozesses wieder zugeführt. Um das mit Trennpartikeln versetzte Schneidmedium aufzufangen und zu sammeln dient ein Auffangbecken. Die Umhausung, die den Arbeitsraum des Handhabungsroboter möglichst hermetisch umschließt, um ein unkontrolliertes Entweichen des mit Trennpartikeln versetzte Schneidmedium in die Umgebung zu verhindern, ist ebenfalls an der mobilen Plattform montiert und/oder um diese herum erweiterbar aufstellbar.

Vorzugsweise sind auf der mobilen Plattform die Umhausung sowie das Auffangbecken derart ausgebildet und angeordnet, so dass die Umhausung montier- und demontierbar ausgebildet und Teil der Plattform ist. Darüber hinaus ist das Auffangbecken als portable Einheit relativ zur Plattform positionierbar und in oder auf der Plattform wieder verstaubar ausgebildet.

Nicht notwendigerweise jedoch in vorteilhafter Form ist zusätzlich auf der mobilen Plattform wenigstens ein Reservoir bzw. Tank zur Bevorratung des Schneidmediums vorgesehen, das mit der Einrichtung zur Durchführung des Strahlschneidprozesses und/oder mit der Aufbereitungsanlage fluidisch verbunden ist bzw. mit dieser über eine geeignete fluidische Schnittstelle verbindbar ist. Das wenigstens eine Reservoir für das Schneidmedium kann jedoch auch auf einer zweiten mobilen Plattform, die von einem weiteren Lastkraftwagen bewegt wird, angeordnet sein.

Die lösungsgemäße Anordnung zum Zerteilen von großformatigen, Faserverbundmaterialanteile enthaltende Sperrgut wird im weiteren anhand eines bevorzugten Ausführungsbeispiels unter Bezugnahme von Illustrationen erläutert. Gleichwohl die nachfolgende Anordnung den Einsatz einer Wasserstrahlschneiddüsenanordnung zum Zerteilen eines Rotorblattes für eine Windkraftanlage vorsieht, ist die lösungsgemäße Anordnung weder auf den Einsatz des Wasserstrahlschneidprozesses, noch auf die Zerteilung von Rotorblattanordnungen beschränkt. Grundsätzlich können mit der Anordnung beliebig großformatige, vorzugsweise Faserverbundmaterialanteile enthaltende Sperrgüter zerteilt werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Schematische Darstellung einer lösungsgemäß ausgebildeten Anordnung zum Zerteilen einer Rotorblattanordnung als mobile Einheit auf einem LKW-Anhänger (Seitenansicht),
- Fig. 2: Querschnittsansicht,
- Fig. 3: Darstellung des Arbeitsraumes mit Umhausung,
- Fig. 4: Gesamtansicht der Anordnung mit Rotorblatt sowie
- Fig. 5a - d: Darstellung einer schrittweisen Fragmentierung eines Rotorblattabschnittes

### Wege zur Ausführung der Erfindung, gewerbliche Verwendbarkeit

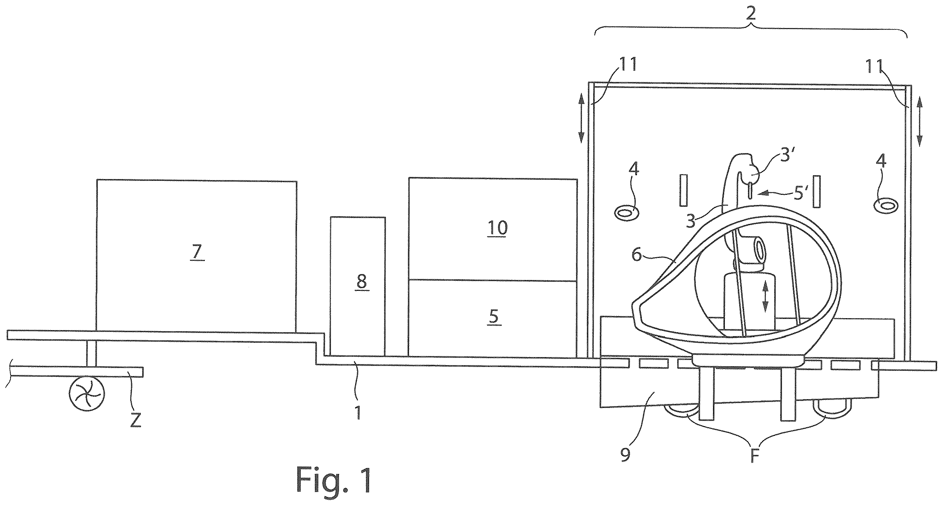

In Figur 1 ist eine schematisierte Seitenansicht einer mobilen Plattform 1 dargestellt, die vorzugsweise einem LKW-Anhänger entspricht, bei dem angenommen sei, dass linksseitig eine Zugmaschine Z an die mobile Plattform 1 ankoppelbar ist. Auf der mobilen Plattform 1 ist eine Anordnung zum Zerteilen von großformatigem, Faserverbundmaterialanteile enthaltenden Sperrgut angeordnet, die bedarfsweise aufgrund ihrer Mobilität an den Standort einer zu entsorgenden Windkraftanlage positioniert werden kann. Unmittelbar über dem Fahrwerk F der mobilen Plattform 1 ist aus Gründen einer möglichst stabilen Lagerung die Zerteileinheit 2 angebracht, die einen Handhabungsroboter 3, vorzugsweise in Form eines vertikalen Knickarmroboters, sowie eine den Arbeitsraum des Handhabungsroboters 3 räumlich ortsauflösend erfassenden Sensoreinrichtung 4 umfasst.

Am Manipulatorendarm 3' des Handhabungsroboters 3 ist eine Wasserstrahlschneiddüsenanordnung 5 angebracht, die mittels des Handhabungsroboters 3 räumlich frei positionierbar ist.

Auf der mobilen Plattform 1 unmittelbar neben der Zerteileinheit 2 ist eine Steuereinheit 5 vorgesehen, die zur Ansteuerung des Handhabungsroboters 3 sowie zur Steuerung des Wasserstrahlschneidprozesses dient. Die mit Hilfe der Sensoreinrichtung 4 erfassten Raumformdaten des in dem Arbeitsbereich des Handhabungsroboters 3 einmündenden Endbereiches des Rotorblattes 6 werden per drahtgebundener oder drahtloser Datenverbindung an die Steuereinheit 5 übermittelt. Die Steuereinheit 5 ermittelt auf der Grundlage dieser Daten Bewegungstrajektorien für die am Handhabungsroboter angebrachte Wasserstrahlschneiddüsenanordnung 5'. Ziel ist es, das Rotorblatt 6 mit Hilfe der Handhabungsroboter 3 geführten Wasserstrahlschneiddüsenanordnung 5' in vorzugsweise 1 m² große Rotorblattteilstücke zu fragmentieren.

Für den Betrieb der Wasserstrahlschneiddüsenanordnung 5' ist diese fluiddicht über eine Hochdruckrohrleitung (nicht dargestellt) mit einer Hochdruckpumpe 7 verbunden, die der Wasserstrahlschneiddüsenanordnung 5' Wasser aus einem Wasserreservoir 8 zuführt. Die Hochdruckwasserpumpe 7 erzeugt den für das Wasserstrahlschneiden erforderlichen Druck von ca. 2500 bis 3000 bar. Die Hochdruckwasserpumpe 7 wird vorzugsweise mittels eines Verbrennungsmotors, beispielsweise eines Dieselmotors angetrieben, zudessen Betrieb ein entsprechender Treibstofftank ebenfalls auf der mobilen Plattform 1 angeordnet ist, so dass die Zerteileinheit vollständig autark arbeitet.

Das Wasserreservoir 8 ist vorzugsweise aus einem oder mehreren modulartig zusammengeführten IBC-Wassertanks bedarfsgerecht zusammengesetzt.

Das über die Wasserstrahlschneiddüsenanordnung 5' in Form eines Schneidwasserstrahls ausgetragene Wasser wird über ein im unteren Bereich des Arbeitsraumes des Handhabungsroboters 3 angeordnetes Auffangbecken 9 gesammelt und über eine schräge Ebene einer Wasseraufbereitungseinheit 10 zugeführt. Das im Auffangbecken 9 gesammelte Brauchwasser, das mit Materialpartikeln des Rotorblattes 6 versetzt ist, wird über ein Rohrleitungssystem zur Wasseraufbereitungsanlage 10 geführt, innerhalb der das Brauchwasser von Materialresten gereinigt wird. Anschließend wird das Wasser zur Wiederverwendung über das Wasserreservoir 8 der Hochdruckpumpe 7 zurückgeführt.

Für einen autarken und mobilen Einsatz der in Figur 1 dargestellten Anordnung ist zudem ein Stromaggregat, nicht dargestellt, zu Zwecken der Energieversorgung sowohl für die Steuereinheit 5 als auch für den Handhabungsroboter 3 auf der mobilen Plattform 1 angeordnet. Das Stromaggregat ist zudem mit einer Batterieeinheit ergänzt, die eine Zwischenspeicherung der mit Hilfe des Stromaggregats erzeugten elektrischen Energie ermöglicht, um bei Störungen des Stromaggregats die Roboter- und Strahlschneidtechnik kontrolliert herunterfahren zu können. Sämtliche elektrische Komponenten auf der mobilen Plattform 1 sind derart angeordnet, dass sie vor jeglichem Wasserkontakt geschützt sind.

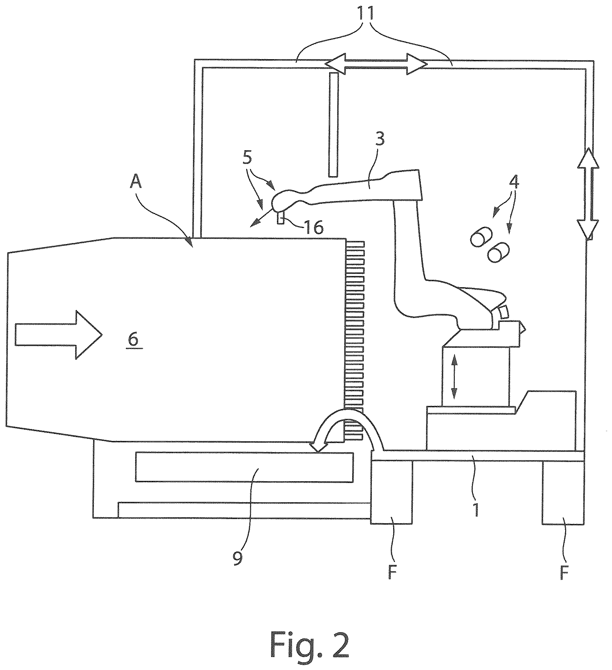

Der Arbeitsraum des Handhabungsroboters 3, in dem der Zerlegungsprozeß am Rotorblatt 6 stattfindet, ist mit einer Umhausung 11 umgeben, die vorzugsweise feste oder flexible Wände vorsieht, so dass die Umgebung und insbesondere die Umwelt sowie auch die elektrischen Geräte auf der mobilen Plattform 1 gegen das Schneidwasser und die bei dem Schneidprozess herausgelösten Materialreste bzw. - partikel geschützt werden. Die Wände der Umhausung 11 erweitern den Arbeitsraum des Handhabungsroboters 3 über die Abmessungen der mobilen Plattform 1 hinaus, wie dies aus einer Seitenansicht in Fahrtlängsrichtung, siehe Figur 2, der mobilen Plattform 1 zu entnehmen ist. Der aus Stabilitätsgründen über dem Fahrgestell F angebrachte Handhabungsroboter 3, der wie bereits vorstehend erwähnt, vorzugsweise in Form eines vertikalen Knickarmroboters mit oder ohne einer zusätzlichen Linearachse ausgebildet ist, ist von einer teleskopartig über die Grundmaße der mobilen Plattform 1 erweiterbaren Umhausung 11 umgeben. Die Wände der Umhausung 11 sind an der mobilen Plattform 1 angeordnet und können teleskopartig erweitert bzw. über geeignete Klappmechanismen die mobile Plattform 1 zeltartig überragend, aufgestellt werden. Die Umhausung 11 besitzt wenigstens eine seitliche Ausnehmung A, durch die das Rotorblatt 6 in den Arbeitsbereich 3' des Handhabungsroboters 3 einführbar ist.

Um zu vermeiden, dass materialkontaminierte Wasserstäube durch die Umhausung 11 nach außen gelangen, wird das von der Umhausung 11 umgebene Volumen mit Hilfe einer Unterdruckquelle (nicht dargestellt) gegenüber der umgebenen atmosphärischen Druckbedingungen mit Unterdruck beaufschlagt.

Ebenso ist aus Figur 2 ersichtlich, dass das Auffangbecken 9 seitlich neben der mobilen Plattform 1 platziert ist und unter dem Endbereich des zu fragmentierenden Rotorblattes 6 zu liegen kommt. Das Auffangbecken 9 kann zu Transportzwecken auf der mobilen Plattform 1 verstaut werden, vorzugsweise bildet das Auffangbecken 9 in einem vertikal, hochgeklappten Zustand eine einseitige Begrenzungswand zum Schutz des über die mobile Plattform 1 eingeschwenkten Handhabungsroboters 3 zu Transportzwecken.

Ebenfalls in Figur 2 ist die Sensoreinrichtung 4 zu entnehmen, die beispielsweise in Form von Laserscannern ausgebildet ist. Die Laserscanner sind derart ausgebildet und angeordnet, so dass sie ortsaufgelöst die Oberflächenkontur des zu fragmentierenden Endteils des Rotorblattes 6 zu erfassen vermögen. Hierzu sind wenigstens zwei Laserscanner in einem ausreichenden Abstand zueinander oberhalb des zu fragmentierenden Rotorblattes 6 montiert. Mit Hilfe der an die Steuereinheit 5 übermittelten, ortsaufgelösten Sensorsignale, ermittelt die Steuereinheit 5 eine räumliche Bewegungstrajektorie, längs der der Handhabungsroboter 3 die Wasserstrahlschneiddüsenanordnung 5' gegenüber der Oberfläche des Rotorblattes 6 zu führen hat. In vorteilhafter Weise ist im Bereich der Wasserstrahlschneiddüsenanordnung 5' am Handhabungsroboter 3 zusätzlich ein taktiles Messgebersystem 16 und/oder berührungslos arbeitende Abstandssensoren und/oder Kraft-Momentensensoren angebracht, um die Wasserstrahlschneiddüsenanordnung 5' möglichst orthogonal zur Oberfläche des Rotorblattes zu führen, so dass ein maximaler Abstand zwischen der Wasserstrahlschneiddüsenanordnung 5' und der Rotorblattoberfläche von ca. 10 mm kollisionsfrei eingehalten werden kann.

Das im Wege des Schneidprozesses ausgetragene Wasser wird prozessbedingt mit Feinstpartikeln des Rotorblattes durchmischt und in Form von Brauchwasser innerhalb des Auffangbeckens 9 gesammelt. Das Brauchwasser wird im Weiteren zur Reinigung der in Figur 1 dargestellten und erläuterten Wasseraufbereitungseinheit 10 zugeführt, die eine Wiederverwendung des Wassers ermöglicht, wodurch die Umwelt nicht belastet wird.

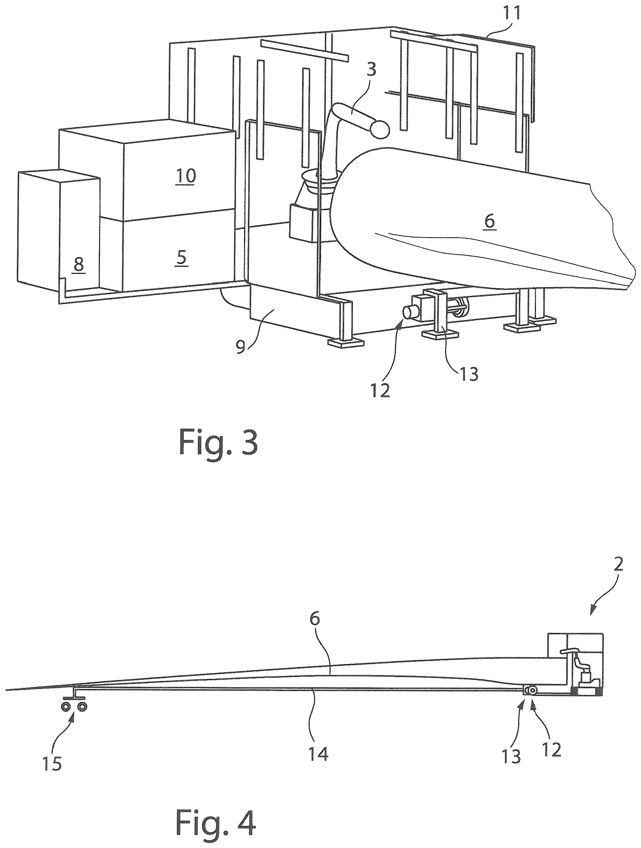

Die sukzessive Zuführung des Rotorblattes 6 in Richtung des Arbeitsraumes 3' des Handhabungsroboters 3 erfolgt mit Hilfe einer Seilzugeinrichtung 12, zu deren Erläuterung auf die Figuren 3 und 4 verwiesen wird. Figur 3 zeigt eine Seitenansicht auf die transparent dargestellte Umhausung 11, innerhalb der der Handhabungsroboter 3 auf der mobilen Plattform 1 montiert ist. Figur 4 zeigt eine Seitenansicht auf die gesamte Länge eines zu fragmentierenden Rotorblattes 6, das stirnseitig der an der mobilen Einheit 1 angebrachten Zerteileinheit 2 diskontinuierlich zugeführt wird. Insbesondere können aus Figur 4 die Größenverhältnisses zwischen einem über 70 m und mehr messenden Rotorblatt 6 und der auf einem LKW montierten Zerteileinheit 2 ersehen werden. Das dem Handhabungsroboter 3 zugeführte Ende des Rotorblattes 6 liegt auf einem Auflager 13 auf, das eine gummierte Rolle vorsieht, um den Transportwiderstand möglichst gering zu halten. Die vorzugsweise fest mit der mobilen Plattform 1 in Wirkverbindung stehende Seilzugeinrichtung 12 weist ein um eine motorisch angetriebene Achse aufwickelbares Stahlseil 14 auf, dessen Stahlseilende an einem Unterbauwagen 15 befestigt ist, der vorzugsweise mittels Klemmung im Rotorblattspitzenbereich befestigt ist.

Solange der Schneidprozess mit Hilfe der Wasserstrahlschneiddüsenanordnung 5' andauert, verbleibt das Rotorblatt 6 stationär, vorzugsweise dient eine zusätzliche im Bereich des Auflagers 13 vorgesehene Fixiereinrichtung zur Fixierung des Rotorblattes 6 während des Schneidens.

Zwischen den Schneidvorgängen wird der Unterbauwagen 15 an der Rotorblattspitze über die Seilzugeinrichtung 12 in Richtung der Zerteileinheit 2 gezogen, wodurch das Rotorblatt 6 der Zerteileinheit 12 diskontinuierlich zugeführt wird.

Aufgrund des Aufbaus sämtlicher Komponenten der Anordnung zum Zerteilen eines Rotorblattes auf einer mobilen Plattform 1, kann die Zerteileinheit zu einem beliebigen Einsatzort gebracht werden, um vor Ort bereits demontierte Rotorblätter zu zerkleinern. Hierdurch entfallen zum einem der logistisch aufwändige Transport ganzer Rotorblätter bzw. großer Rotorblattsegmente, und zum anderen zusätzliche Zerkleinerungsschritte der großen Rotorblattsegmente in einem stationären Sägewerk.

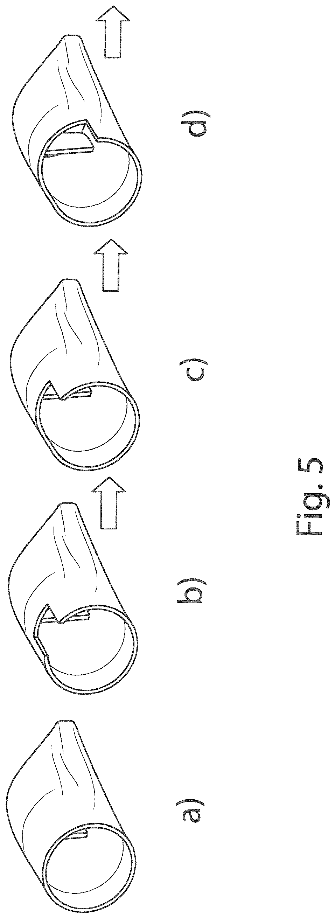

Vorzugsweise werden etwa 1 m² große Rotorblattsegmente aus dem Rotorblatt 6 geschnitten. Eine bevorzugte Schnitttechnik wird anhand der Segmentbilddarstellung in Figur 5 a-d erläutert. Figur 5a zeigt die der Zerteileinheit 2 zugeführte Rotorblattwurzel vor dem Schneiden. In einem ersten Schritt werden zunächst ca. 1 m lange Schnitte in Längsrichtung des Rotorblattes 6 eingeschnitten, die in Umfangsrichtung jeweils etwa 1m voneinander entfernt sind. Anschließend erfolgt ein Schnitt in Umfangsrichtung, um ein erstes Segment abzutrennen, siehe hierzu Figur 5b. Das abgetrennte Rotorblattsegment fällt nach unten. Das abgetrennte Rotorblattsegment kann mittels eines zusätzlichen am LKW angebrachten Manipulators, beispielsweise in Form eines weiteren Handhabungsroboters und/oder Transportband entfernt und in einem Container gesammelt werden. Der Trennvorgang kann sukzessive wiederholt werden, bis sämtliche durch Längsschnitte unterteilte Segmente in Umfangsrichtung vom stirnseitigen Ende des Rotorblattes 6 abgetrennt sind, siehe hierzu die Sequenzbilder 5c und d.

In einem weiteren Schritt wird das Rotorblatt mit Hilfe der Seilzugeinrichtung 12 in Richtung der Zerteileinheit 2 gezogen und nachfolgend entsprechend fixiert. Erneut erfolgt die Vermessung der Rotorblattgeometrie und eine Ermittlung der Schneidtrajektorien zum Auftrennen des endseitigen Rotorblattbereiches. Nach entsprechender Separierung und Entfernung der einzelnen Rotorblattsegmente erfolgt der vorstehend erläuterte Vorgang in schrittweiser Wiederholung, bis das gesamte Rotorblatt zerteilt ist. Die einzelnen Prozessschritte lassen sich überwiegend automatisiert ausführen, so dass die Zerteilung ganzer Rotorblätter mit einer Mindestanzahl an Personal bewerkstelligt werden kann.

### Bezugszeichenliste

- 1: Mobile Plattform
- 2: Zerteileinheit
- 3: Handhabungsroboter
- 3': Arbeitsbereich
- 4: Sensoreinrichtung
- 5: Steuereinheit
- 5': Wasserstrahlschneiddüsenanordnung
- 6: Rotorblatt
- 7: Hochdruckpumpe
- 8: Wasserreservoir
- 9: Auffangbecken
- 10: Wasseraufbereitungseinrichtung
- 11: Umhausung
- 12: Seilzugeinrichtung
- 13: Auflager
- 14: Stahlseil
- 15: Unterbauwagen
- 16: Messsensor
- F: Fahrwerk
- A: Ausnehmung

## Patentansprüche

1. Anordnung zum Zerteilen von Rotorblättern (6) für Windkraftanlagen, mit einer Zerteileinheit (2), der über eine Zuführeinrichtung (12) jeweils ein Rotorblatt (6) zuführbar ist und die einen Handhabungsroboter (3) sowie eine Sensoreinrichtung (4) derart umfasst, so dass der Handhabungsroboter (3) mit einer Einrichtung zur Durchführung eines Strahlschneidprozesses mit einer ein Schneidmedium austragenden Strahlschneiddüsenanordnung (5') kombiniert ist, die innerhalb eines durch die Roboterkinematik des Handhabungsroboters (3) zugänglichen Arbeitsraumes (3') positionierbar ist, der von der Sensoreinrichtung (4) zur Erzeugung ortsaufgelöster Sensorsignale erfassbar ist, wobei eine Steuereinheit (5) vorgesehen ist, die mit der Sensoreinrichtung (4) in Datenverbindung steht und auf der Grundlage der ortsaufgelösten Sensorsignale den Handhabungsroboter (3) steuert, wobei,
die Einrichtung zur Durchführung des Strahlschneidprozesses die am Endmanipulatorarm des Handhabungsroboters (3) angebrachte Strahlschneiddüsenanordnung (5'), eine mit dieser fluiddicht verbundene Hochdruckrohrleitung sowie eine mit der Hochdruckrohrleitung verbundene Hochdruckpumpe (7) umfasst, die mit einem das Schneidmedium bevorratenden Reservoir (8) verbunden oder über eine Fluidschnittstelle verbindbar ist,
dass der Arbeitsraum (3') einen Bodenbereich vorsieht, in dem ein Auffangbecken (9) angeordnet ist, das mit einer Aufbereitungsanlage (10) verbunden ist, in der das Schneidmedium von Materialpartikeln gereinigt wird und die das gereinigte Schneidmedium über eine Leitung der Einrichtung zur Durchführung des Strahlschneidprozesses mittel- oder unmittelbar zuführt, **dadurch gekennzeichnet, dass**
a) die Zerteileinheit (2), umfassend den Handhabungsroboter (3'), die Sensoreinrichtung (4), die Einrichtung zur Durchführung des Strahlschneidprozesses, umfassend die Strahlschneiddüsenanordnung (5'), die mit dieser fluiddicht verbundenen Hochdruckrohrleitung sowie die mit der Hochdruckrohrleitung verbundene Hochdruckpumpe (7),
b) die Steuereinheit (5) sowie
c) die Aufbereitungsanlage (10) für das Schneidmedium bezüglich Größe, Gewicht und Anordnung derart ausgebildet sind, dass die Zerteileinheit (2) und Steuereinheit (5) und Aufbereitungseinheit (10) zum Zwecke eines Transportes auf einer straßenzugelassenen, mobilen Plattform (1) angeordnet sind, und
dass die Zuführeinrichtung eine Seilzugeinrichtung (12) sowie ein Auflager (13) für das Rotorblatt (6) vorsieht.

2. Anordnung nach Anspruch 1,
**dadurch gekennzeichnet, dass** die Steuereinheit (5) auf der Grundlage der ortsaufgelösten Sensorsignale die Einrichtung zur Durchführung des Strahlschneidprozesses steuert.

3. Anordnung nach Anspruch 1 oder 2,
**dadurch gekennzeichnet, dass** am Handhabungsroboter (3) wenigstens ein berührungsloser und/oder taktiler Abstandssensor zur Erzeugung von Abstandssignalen angebracht ist, und
dass der wenigstens eine Abstandssensor mit der Steuereinheit (5) in Datenverbindung steht, die auf der Grundlage der Abstandssignale den Handhabungsroboter (3) und/oder die Einrichtung zur Durchführung des Strahlschneidprozesses steuert.

4. Anordnung nach einem der Ansprüche 1 bis 3,
**dadurch gekennzeichnet, dass** zumindest der Arbeitsraum (3') umfassend den Handhabungsroboter (3) sowie die Sensoreinrichtung (4) von einer Umhausung (11) umgeben ist, mit Ausnahme eines Zuführungsbereiches für eine seitliche Zuführung des Rotorblattes (6) in den Arbeitsraum (3').

5. Anordnung nach einem der Ansprüche 1 bis 4,
**dadurch gekennzeichnet, dass** das von der Umhausung (11) umfasste Volumen mit einer Unterdruckquelle verbunden ist, zur Herstellung eines Unterdruckes innerhalb der Umhausung (11).

6. Anordnung nach einem der Ansprüche 1 bis 5,
**dadurch gekennzeichnet, dass** der Handhabungsroboter (3) ein vertikaler Knickarmroboter mit oder ohne zusätzlicher linearer Vertikalverstellung ist.

7. Anordnung nach einem der Ansprüche 1 bis 6,
**dadurch gekennzeichnet, dass** zusätzlich auf der Plattform (1) die Umhausung (11) sowie das Auffangbecken (9) derart ausgebildet und angeordnet sind, so dass die Umhausung (11) montier- und demontierbar ausgebildet und Teil der mobilen Plattform (11) ist und das Auffangbecken (12) als portable Einheit positionierbar und in der Plattform (11) wiederverstaubar gelagert ist.

8. Anordnung nach einem der Ansprüche 1 bis 7,
**dadurch gekennzeichnet, dass** zusätzlich auf der Plattform (11) wenigstens ein Reservoir für das Schneidmedium (8), das mit der Einrichtung zur Durchführung des Strahlschneidprozesses und/oder mit der Aufbereitungsanlage (10) fluidisch verbunden ist.

9. Anordnung nach Anspruch 8,
**dadurch gekennzeichnet, dass** zusätzlich auf der Plattform (11) eine elektrische Energiequelle , die zumindest mit der Steuereinheit (5) und mit dem Handhabungsroboter (3) verbunden ist, angebracht ist.

10. Anordnung nach einem der Ansprüche 1 bis 9,
**dadurch gekennzeichnet, dass** eine Manipulatoreinheit im Bereich des Arbeitsraumes (3') vorgesehen ist, die derart ausgebildet und angeordnet ist, so dass vom Rotorblatt (6) im Wege des Strahlschneidprozesses separierte Sperrgutfragmente aus dem Arbeitsraum (3') separierbar sind.

11. Anordnung nach einem der Ansprüche 1 bis 10,
**dadurch gekennzeichnet, dass** das Schneidmedium Wasser, Sand und/oder Glaskugeln enthält.

12. Anordnung nach einem der Ansprüche 1 bis 11,
**dadurch gekennzeichnet, dass** der Strahlschneidprozess ein Wasserstrahlschneidprozess, Sandstrahl-Schneidprozess oder ein Glaskugel-Schneidprozess oder eine Kombination aus den vorstehenden Prozessen ist.

## Claims

1. An assembly for dividing up rotor blades (6) for wind turbines, having a dividing unit (2), to which a rotor blade (6) can be fed via a feed device (12) and which comprises a handling robot (3) and a sensor device (4) such that the handling robot (3) is combined with a device for carrying out a jet cutting process having a jet cutting nozzle assembly (5') which outputs a cutting medium and can be positioned inside a working space (3') which is accessible by the robot kinematics of the handling robot (3) and can be sensed by the sensor device (4) to generate spatially resolved sensor signals, a control unit (5) being provided which is data-connected to the sensor device (4) and controls the handling robot (3) on the basis of the spatially resolved sensor signals,
the device for carrying out the jet cutting process comprising the jet cutting nozzle assembly (5') attached to the end manipulator arm of the handling robot (3), a high-pressure pipe connected to said jet cutting nozzle assembly in a fluid-tight manner, and a high-pressure pump (7), which is connected to the high-pressure pipe and is connected to or can be connected via a fluid interface to a reservoir (8) storing the cutting medium,
the working space (3') providing a floor region in which a collection basin (9) is arranged, which is connected to a processing system (10) in which the cutting medium is cleaned of material particles and which feeds the cleaned cutting medium via a line directly or indirectly to the device for carrying out the jet cutting process,
**characterised in that**
a) the dividing unit (2), comprising the handling robot (3'), the sensor device (4), the device for carrying out the jet cutting process, comprising the jet cutting nozzle assembly (5'), the high-pressure pipe connected to the latter in a fluid-tight manner, and the high-pressure pump (7) connected to the high-pressure pipe,
b) the control unit (5), and
c) the processing system (10) for the cutting medium are designed in terms of size, weight and arrangement such that the dividing unit (2) and control unit (5) and processing unit (10) are arranged on a street-legal, mobile platform (1) for the purposes of transport, and that the feed device provides a cable pull device (12) and a support (13) for the rotor blade (6).

2. The assembly according to Claim 1,
**characterised in that** the control unit (5) controls the device for carrying out the jet cutting process on the basis of the spatially resolved sensor signals.

3. The assembly according to Claim 1 or 2,
**characterised in that** at least one contactless and/or tactile distance sensor is attached to the handling robot (3) to generate distance signals, and
that the at least one distance sensor is data-connected to the control unit (5), which controls the handling robot (3) and/or the device for carrying out the jet cutting process on the basis of the distance signals.

4. The assembly according to any one of Claims 1 to 3, **characterised in that** at least the working space (3') comprising the handling robot (3) and the sensor device (4) is surrounded by a housing (11) with the exception of a feed region for a lateral feed of the rotor blade (6) into the working space (3').

5. The assembly according to any one of Claims 1 to 4,
**characterised in that** the volume enclosed by the housing (11) is connected to a negative pressure source to produce a negative pressure inside the housing (11).

6. The assembly according to any one of Claims 1 to 5,
**characterised in that** the handling robot (3) is a vertical articulated arm robot with or without additional linear vertical adjustment.

7. The assembly according to any one of Claims 1 to 6,
**characterised in that** the housing (11) and the collection basin (9) are additionally designed and arranged on the platform (1) such that the housing (11) can be assembled and disassembled and is part of the mobile platform (11), and the collection basin (12) is mounted such that it can be positioned and stowed away again in the platform (11) as a portable unit.

8. The assembly according to any one of Claims 1 to 7,
**characterised in that** on the platform (11) additionally at least one reservoir for the cutting medium (8), said reservoir being fluid-connected to the device for carrying out the jet cutting process and/or to the processing system (10).

9. The assembly according to Claim 8,
**characterised in that** an electrical energy source, which is connected at least to the control unit (5) and to the handling robot (3), is additionally attached on the platform (11).

10. The assembly according to any one of Claims 1 to 9,
**characterised in that** a manipulator unit is provided in the region of the working space (3') and is designed and arranged such that fragments of bulky material separated from the rotor blade (6) during the jet cutting process can be separated out of the working space (3').

11. The assembly according to any one of Claims 1 to 10,
**characterised in that** the cutting medium contains water, sand and/or glass balls.

12. The assembly according to any one of Claims 1 to 11,
**characterised in that** the jet cutting process is a water jet cutting process, a sand jet cutting process or a glass ball cutting process or a combination of the above processes.

## Revendications

1. Système destiné à la séparation de pales de rotor (6) pour des éoliennes avec une unité de séparation (2) à laquelle peut être amenée respectivement une pale de rotor (6) par le biais d'un dispositif d'amenée (12) et qui comprend un robot de manutention (3) ainsi qu'un dispositif de détection (4) de telle manière que le robot de manutention (3) est combiné à un dispositif pour exécuter un processus de coupe au jet avec un système à buse de coupe au jet (5') rejetant un milieu de coupe, qui peut être positionné à l'intérieur d'un espace de travail (3') accessible par la cinématique de robot du robot de manutention (3), qui peut être saisi par le dispositif de détection (4) pour produire des signaux de détection à résolution locale, sachant qu'une unité de commande (5) est prévue, qui est en liaison de données avec le dispositif de détection (4) et commande le robot de manutention (3) sur la base des signaux de détection à résolution locale, sachant
que le dispositif pour exécuter le processus de coupe au jet, le système de buse de coupe au jet (5') monté sur le bras de manipulateur d'extrémité du robot de manutention (3) comprend une conduite à haute pression reliée à celui-ci de façon étanche au fluide ainsi qu'une pompe à haute pression (7) reliée à la conduite à haute pression qui est reliée à un réservoir (8) approvisionnant en milieu de coupe ou peut être reliée par le biais d'une interface de fluide,
que l'espace de travail (3') prévoit une zone de fond dans laquelle est disposé un bac de collecte (9), qui est relié à une installation de traitement (10) dans laquelle le milieu de coupe est nettoyé des particules de matériau et qui achemine indirectement ou directement le milieu de coupe nettoyé par un conduit du dispositif destiné à exécuter le processus de coupe au jet,
**caractérisé en ce que**
a) l'unité de séparation (2), comprenant le robot de manutention (3'), le dispositif de détection (4), le dispositif pour exécuter le processus de coupe au jet, comprenant le système à buse de coupe au jet (5'), la conduite à haute pression reliée à celui-ci de façon étanche au fluide ainsi que la pompe à haute pression (7) reliée à la conduite à haute pression,
b) l'unité de commande (5) ainsi que
c) l'installation de traitement (10) pour le milieu de coupe sont constitués par rapport à la taille, au poids et à la disposition de telle manière que l'unité de séparation (2) et l'unité de commande (5) et l'unité de traitement (10) sont disposées à des fins d'un transport sur une plateforme (1) mobile, à homologation routière et **en ce que** le système d'amenée prévoit un dispositif de traction par câble (12) ainsi qu'un support (13) pour la pale de rotor (6).

2. Système selon la revendication 1,
**caractérisé en ce que** l'unité de commande (5) commande le dispositif pour exécuter le processus de coupe au jet sur la base des signaux de détection à résolution locale .

3. Système selon la revendication 1 ou 2, **caractérisé en ce qu'**au moins un capteur de proximité sans contact et/ou tactile est monté sur le robot de manutention (3) pour produire des signaux de proximité et
**en ce qu'**au moins un capteur de proximité se trouve en liaison de données avec l'unité de commande (5), qui commande le robot de manutention (3) et/ou le dispositif pour exécuter le processus de coupe au jet sur la base des signaux de proximité.

4. Système selon l'une quelconque des revendications 1 à 3,
**caractérisé en ce qu'**au moins l'espace de travail (3') comprenant le robot de manutention (3) ainsi que le dispositif de détection (4) est entouré par une enceinte (11), à l'exception d'une zone d'acheminement pour une approche latérale de la pale de rotor (6) dans l'espace de travail (3').

5. Système selon l'une quelconque des revendications 1 à 4,
**caractérisé en ce que** le volume entouré par l'enceinte (11) est relié à une source de dépression pour réaliser une dépression à l'intérieur de l'enceinte (11).

6. Système selon l'une quelconque des revendications 1 à 5,
**caractérisé en ce que** le robot de manutention (3) est un robot à bras articulé vertical avec ou sans réglage vertical linéaire supplémentaire.

7. Système selon l'une quelconque des revendications 1 à 6,
**caractérisé en ce que** l'enceinte (11) ainsi que le bac de collecte (9) sont constitués et disposés en plus sur la plateforme (1) de telle manière que l'enceinte (11) est constituée montable et démontable et fait partie de la plateforme (1) mobile et le bac de collecte (12) peut être positionné comme unité portable et est logé pouvant être à nouveau rangé dans la plateforme (11).

8. Système selon l'une quelconque des revendications 1 à 7,
**caractérisé par** en plus sur la plateforme (11), au moins un réservoir pour le milieu de coupe (8) est relié du point de vue fluide au dispositif pour exécuter le processus de coupe au jet et/ou à l'installation de traitement (10).

9. Système selon la revendication 8,
**caractérisé en ce qu'**une source d'énergie électrique, qui est reliée au moins à l'unité de commande (5) et au robot de manutention (3), est disposée en plus sur la plateforme (11).

10. Système selon l'une quelconque des revendications 1 à 9,
**caractérisé en ce qu'**une unité de manipulateur est prévue dans la zone de l'espace de travail (3'), qui est constituée et disposée de telle manière que des fragments de matériau de blocage séparés de la pale de rotor (6) au cours du processus de coupe au jet peuvent être séparés de l'espace de travail (3').

11. Système selon l'une quelconque des revendications 1 à 10,
**caractérisé en ce que** le milieu de coupe contient de l'eau, du sable et/ou des billes de verre.

12. Système selon l'une quelconque des revendications 1 à 11,
**caractérisé en ce que** le processus de coupe au jet est un processus de coupe au jet d'eau, un processus de coupe au jet de sable ou un processus de coupe aux billes de verre ou une combinaison des processus précédents.
